# EUROPEAN PATENT APPLICATION

(11) **EP 2 230 798 A1**
(43) Date of publication of application: **22.09.2010**
(21) Application number: 09305241.3
(22) Date of filing: 17.03.2009
(51) Int. Cl.: H04L 12/24, H04L 29/06, H04L 29/08

(54) **Method and system for remote management of applications hosted on a device, and server for use in such a system**

(71) Applicant: Alcatel Lucent, 75008 Paris (FR)
(72) Inventor: Cristallo, Geoffrey, 1080, Bruxelles (BE); Vandaele, Piet, 9040, Sint-Amandsberg (BE)
(74) Representative: D'Halleweyn, Nele Veerle Trees Gertrudis

(57) **Abstract**

Application management server adapted for residing in a network between external systems at a Northbound interface of the application management server, and a plurality of devices at a Southbound interface thereof, wherein different devices thereof may be arranged for managing an application using different method commands, wherein the application management server is provided with an independent interface for communicating with the external systems, using generic method commands relating to the application, independent of the method commands being used by said plurality of devices, wherein the interface is arranged for uniquely converting the generic commands received from the external systems into commands useable at the Southbound interface, and vice versa.

## Description

### FIELD OF THE INVENTION

The present invention relates to an application management server residing in a network between an external system, such as an OSS (Operations Support System) or a Subscriber Repository such as HSS (Home Subscriber Service), at the Northbound interface of the application management server, and a device, typically a Service Gateway (SGW), at the Southbound interface. The invention further relates to a method and system for remote management of applications hosted on a device, typically a service gateway at a Southbound interface of the application server, and to an external system arranged for communicating with such an application management server.

### BACKGROUND

Remote management of applications hosted on customer premises equipment, and for example on Service Gateways (SGWs), is an emerging market. Remote management systems consist of a management platform in the customer device, a remote management server in the network, and a remote management protocol for communication between a management client or agent running on the management platform in the customer device and the remote management server. The concept of remote management is appealing to operators because it allows them to dynamically deploy new applications into the customer's home. For example, new applications can be downloaded and installed on an SGW without impacting any other service already deployed by the customer. Remote management will typically encompass complete lifecycle management of the applications.

From a technical perspective, application lifecycle management is accomplished through extensions of the remote management protocol. There exist several protocols to do remote management, such as for instance CWMP (CPE Wan Management Protocol, also known as TR-069), SNMP (Simple Network Management Protocol), or OMA-DM (Open Mobile Alliance Device Management).

TR-069 is an abbreviation for Technical Report 069, and is a DSL for a technical specification entitled CPE WAN Management Protocol (CWMP). This protocol consists of an object model in which remote procedure calls (RPCs) are invoked for bidirectional communication between a customer device and a management server. When using TR-069, application lifecycle management may be accomplished through new RPCs or other semantics for existing RPCs as well as extensions to the TR-069 object model. Hence, a trivial way to provide application management is to extend the ACS with support for new RPCs and object model parameters. Such a solution will work, but does not provide a lot of abstraction to the ACS Northbound Systems (NBSs), in particular for the following reasons:
- The NBS needs to be aware of the remote management protocol that is being used for remote lifecycle management of a particular device, and may even need to interact with multiple management servers depending on the remote management protocol that is used.
- The NBS needs to be aware of the Execution Environment. For the same end-user application, a different software component will need to be downloaded to the customer device depending on the execution environment, and potentially a different set of Management Methods will be exposed for e.g. an OSGi (Open Service Gateway initiative) Execution Environment then for a .net or Native Linux Execution Environment.

### SUMMARY

The object of the present invention is to provide a server, a system, an external system and a method as described in the section above entitled field of the invention, which allow for management of the lifecycle of software applications on devices such as service gateways in an improved way, and in particular allowing a more unified application management by the Northbound systems when compared to the systems of the prior art.

According to an aspect of the invention, the management of the lifecycle of software applications on a customer service device by a Northbound system (NBS), i.e. an external system at the Northbound side, is made independent of the management protocol supported by the customer device.

According to another aspect of the invention, the management of the lifecycle of software applications on a customer service device by an NBS, is made independent of the actual execution environment running on the customer device.

According to yet another aspect of the invention, the management of the lifecycle of software applications on a customer service device by an NBS, is made independent of the actual remote management server (auto-configuration server) that needs to be triggered for a particular device, i.e. the NBS does not have to know which instance of a particular remote management server needs to be triggered for a particular device. This may be advantageous in view of the scalability of the system.

According to an embodiment of the invention the application management server is adapted for residing in a network between external systems at a Northbound interface (NBI) of the application management server, and a plurality of devices at a Southbound interface (SBI) thereof. Different devices of said plurality of devices are typically arranged for managing an application using different method commands (those commands may be associated with a particular remote management protocol, and/or with a particular service platform and/or with a particular auto-configuration server). The application management server is provided with an independent interface for communicating with the external systems, using generic method commands relating to the application, independent of the method commands being used by said plurality of devices. The application server is further arranged for uniquely converting the generic commands received from the external systems into commands useable at the Southbound interface, and vice versa.

According to a preferred embodiment the independent interface for communicating with the external systems is independent of the remote management protocol used by said plurality of devices, i.e. the same NBI will be exposed to the external systems (the NBSs) independent of the protocol used at the SBI. According to a preferred embodiment, the remote management protocol used by the plurality of devices can for example be any one of the following:
CWMP (CPE Wan Management Protocol, also known as TR-069), SNMP (Simple Network Management Protocol), or
OMA-DM (Open Mobile Alliance Device Management). It will be understood that the case where a device uses any future remote management protocol is also covered by the invention.

According to another embodiment the independent interface is independent of the execution environment running on any device of said plurality of devices, i.e. the same NBI will be exposed to the NBS independent on the service platform deployed on the device. Preferably, the management of the lifecycle of software applications is both independent of the management protocol and of the actual execution environment running on the customer device. The device may run for example any one of the following execution environments (service platforms):
an OSGi (Open Service Gateway initiative) Execution Environment,
a .net Execution Environment, or
a Native Linux Execution Environment.
It will be understood that the case where a device runs any future service platform is also covered by the invention.

According to preferred feature of the invention, the independent interface for communicating with the external systems is independent of the remote management server used by a device of said plurality of devices. This means that if there are for example two remote management servers (e.g. two TR-069 ACSs), the NBS does not need to know which remote management server manages a particular device.

Preferably the devices are service gateways.

The invention further relates to a system comprising an application manager, a plurality of external systems at a Northbound interface of the application management server, and a plurality of devices, typically service gateways at a Southbound interface thereof, wherein the plurality of external systems are arranged for communicating with the application server using generic method commands relating to the application, and wherein the plurality of devices are arranged for communicating with the application server using the device-specific method commands relating to the application.

The invention also relates to an external system adapted for being installed at a Northbound interface of an application management server, wherein said external system is arranged for communicating with the application server using generic method commands relating to the application.

Finally the invention relates to a method for remote management of applications hosted on a device using an application server residing in a network between external systems at a Northbound interface and a plurality of devices at the Southbound interface. Generic commands relating to the application are used for the communication between an external system and the application server, which generic method commands are converted in device-specific method commands useable by the device for which the generic commands are intended, which device manages the application using said device-specific method commands.

According to a preferred embodiment the device manages the application using a remote management protocol, wherein the generic commands exchanged between the external system and the application server are independent of the remote management protocol used by the device. The remote management protocols used by the device are for example any one of the following: CWMP, SNMP, or OMA-DM.

According to another preferred embodiment of the method of the invention, the device runs the application using a particular execution environment, wherein the generic method commands relating to the application exchanged between the external system and the application server are independent of the execution environment of the device. The execution environment of the device is typically any one of the following: an OSGi, a .net, or a Native Linux Execution Environment.

### BRIEF DESCRIPTION OF THE FIGURES

The accompanying drawings are used to illustrate presently preferred non-limiting exemplary embodiments of the present invention. The above and other advantages, features and objects of the invention will become more apparent, and the invention will be better understood from the following detailed description when read in conjunction with the accompanying drawings, in which:
Figure 1 is a schematic view of an architecture with a home network with a number of customer devices that are remotely management by a management server;
Figure 2A illustrates schematically a first embodiment of a system according to the invention; and
Figure 2B illustrates a variant of the embodiment of figure 2A;
Figure 3 illustrates schematically a second embodiment of the invention.

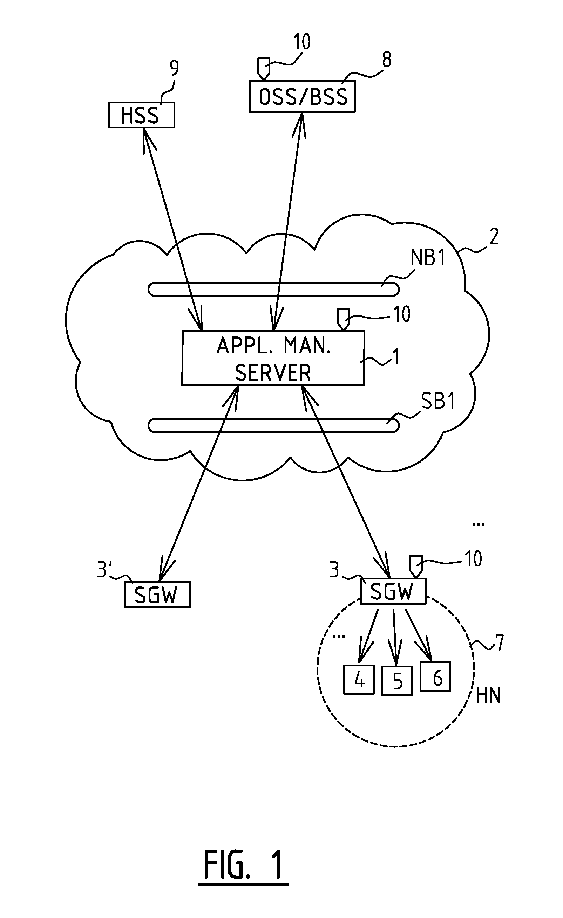

Figure 1 illustrates a communication system with a management server 1 which resides in a network 2 and which is adapted to manage customer devices 3, 3', 4, 5, 6 at the subscriber premises. Here a first set of customer devices consist of a Service Gateway SGW 3, and three other devices 4, 5, 6 which are coupled to the SGW 3 over the home network 7. The management server further manages a stand-alone SGW 3'. The management server 1 exposes a Northbound interface NBI to a number of Northbound systems NBSs (external systems). In the example of figure 1 the external systems consist of an OSS 8 and a Home Subscriber Service (HSS) 9.

In the example of figure 1 the service gateway 3 is provided with a management platform, e.g. an OSGi service platform. The presence of an OSGi service platform in the service gateway enables the remote installation, update and/or removal of bundles 10, i.e. software modules or components from a management server 1 without disrupting the operation of the service gateway.

A management client or agent, e.g. a TR-069 agent running on the management platform in the customer device serves as an interface between the bundle or software application and the remote management server 1, and enables the management platform in the customer device to expose manageable parameters to the remote management server.

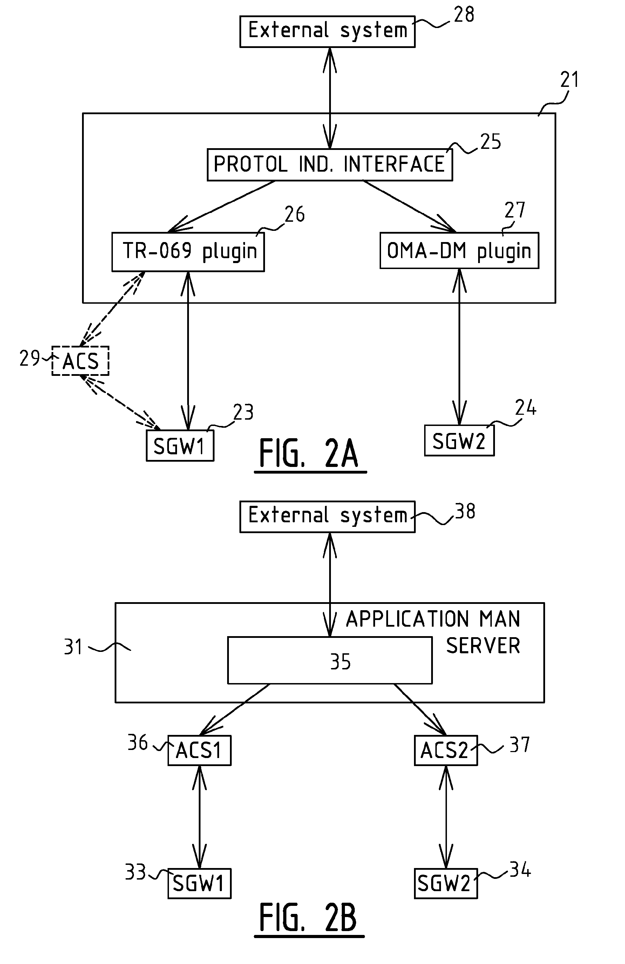

According to a first embodiment of the invention which is schematically illustrated in figure 2, the application management server 21 is able to manage of lifecycle of applications via a TR-069 management protocol or via the OMA-DM management protocol, while exposing the same external interface to its Northbound/external systems 28. According to this embodiment the external interface is independent of the underlying management protocol used to communicate with the SGWs. This is achieved by providing a protocol independent interface in the application management server for the Northbound communication, and by providing dedicated protocol plug-ins 26, 27 for the Southbound interface to the SGWs 23 and 24. Further it is also possible that the application management server does not directly communicate with the SGW, but does this via an ACS 29.

Figure 2B illustrates an alternative embodiment where the application management server 31 has an interface for communicating with one or multiple auto-configuration servers 36, 37 that can handle the Southbound communication with the service gateways 33, 34. Again the application management server 31 is provided with a protocol independent interface 35 so that the same external interface is exposed to the Northbound systems.

To define such a protocol independent Northbound Interface the following has to be considered. As an example the scenario consisting of the download, installation and activation of a software bundle on a given SGW, is illustrated. With a given southbound protocol "A", the command by which the Auto Configuration Server triggers the SGW to download a given software bundle from a given location, may be a different command than the command by which the server triggers the SGW to install the downloaded bundle. Activating (i.e. starting) the software bundle may require a third command.

With another protocol "B", the operations of downloading and installing may be combined, i.e. the SGW will automatically install a software bundle immediately after it has been downloaded. In other ways, with protocol "B", it might be impossible, or difficult to trigger the SGW to only download a software bundle, and not to install it unless explicitly specified by the Auto Configuration Server.

If both protocols "A" and "B" are used, the definition of such a protocol agnostic northbound interface means that one preferably supports the granularity of operations at each protocol, while at the same time make sure that the result returned on the northbound interface can be unambiguously interpreted (e.g. if one triggers a "download" operation on the northbound interface, and protocol "B" is eventually used to communicate to the SGW, the "success" result returned on the northbound interface may not only indicate "success" for the download operation, but may also indicate "success" for the "activation" operation, that was not explicitly requested by the northbound system).

In addition, the definition of such a protocol agnostic interface must preferably be generic enough so that it remains applicable even after new protocols are defined (e.g. if a new protocol "C" is defined)

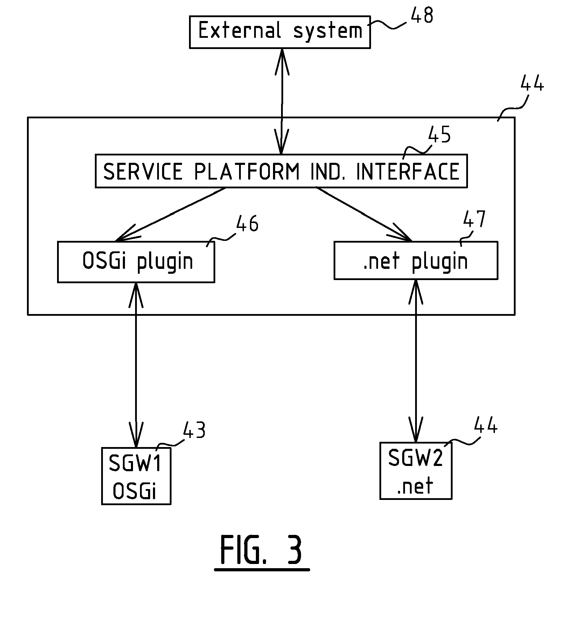

Figure 3 illustrates a second embodiment of a system according to the invention. According to this embodiment, the application management server 41 is able to manage the lifecycle of applications deployed on an OSGi or on a .net execution environment present in the service gateways 43, 44. As in the first embodiment, the application management server exposes the same external interface to its external systems 48, such as an OSS or a Subscriber Repository such as an HSS. According to the second embodiment this external interface is independent of the execution environment running on the service gateways 43, 44. In the second embodiment the application management server is provided with dedicated Execution Environment Abstraction plugins, in the example an OSGi plugin 46 and a .net plugin 47. In that way, the external systems 48 no longer need to be aware of the specific execution environment supported by the service gateways 43, 44.

When defining an interface that is independent of the execution environment running on the SGW the following has to be considered. Each execution environment could be characterized by a different state machine, different states, and different state transitions. For example, with an execution environment "A" the transition between two states "S1" and "S2" might need an explicit request from the application Management Server (i.e. once in state S1, the bundle will remain in this state as long as the server does not send an explicit command for transiting to S2). With an execution environment "B" the transition between the same two states "S1" and "S2" might be implicit (i.e. once in state S1, the bundle will automatically/autonomously transition to state S2, without the need for the server to send an explicit command). The "success" result exposed on the northbound interface of the application server should in this example be unambiguous, irrelevant from the execution environment. In other words, "success" in case the execution environment "A" is used only means that the bundle is in state S1, while with another execution environment, the "success" response of the same operation needs in this example to unambiguously indicate that the bundle is now in state S2.

In addition, states may exist in an execution environment "A" but not in another execution environment "B". In this case, the definition of an execution environment agnostic northbound interface may mean expose a method that will be applicable only for some execution environments. Since the northbound system is not aware of the execution environment, it may trigger such a command, and the command will eventually failed because the execution environment does not support the command. The corresponding exception/error should then preferably be accurately returned to the northbound system.

According to a third embodiment of the invention, the application management server provides an abstraction of both the execution environment and the management protocol. Such a third embodiment will be a combination of the embodiment of figure 2A or 2B and figure 3, where the application management server will be provided with one or more plug-ins of management protocols and one or more plug-ins of execution environment plug-ins.

While the principles of the invention have been set out above in connection with specific embodiments, it is to be clearly understood that this description is merely made by way of example and not as a limitation of the scope of protection which is determined by the appended claims.

## Claims

1. Application management server adapted for residing in a network between external systems at a Northbound interface of the application management server, and a plurality of devices at a Southbound interface thereof, wherein different devices thereof may be arranged for managing an application using different method commands,
wherein the application management server is provided with an independent interface for communicating with the external systems, using generic method commands relating to the application, independent of the method commands being used by said plurality of devices, wherein the interface is arranged for uniquely converting the generic commands received from the external systems into commands useable at the Southbound interface, and vice versa.

2. Application management server according to claim 1, adapted for residing between the external systems and the plurality of the devices, wherein different devices therof may use different remote management protocols with corresponding different method commands, wherein the independent interface for communicating with the external systems is independent of the remote management protocol(s) used by said plurality of devices.

3. Application management server according to claim 2,
wherein the independent interface is arranged for converting generic management protocol commands from the external systems into commands used by any one of the following remote management protocols and vice versa, depending on the remote management protocol used by the device for which the command is intended:
CWMP (CPE Wan Management Protocol, also known as TR-069), SNMP (Simple Network Management Protocol), or
OMA-DM (Open Mobile Alliance Device Management).

4. Application management server according to any of the claims 1-3, adapted for residing between the external systems and the plurality of the devices, said devices having different execution environments (service platforms) with corresponding different method commands, wherein the independent interface is independent of the execution environment running on a device of said plurality of devices.

5. Application management server according to claim 4,
wherein the independent interface is arranged for converting generic method commands from the external systems into commands used by any one of the following execution environments, and vice versa, depending on the execution environment used by the device for which the command is intended:
an OSGi (Open Service Gateway initiative) Execution Environment,
a .net Execution Environment, or
a Native Linux Execution Environment.

6. Application management server of any of the previous claims, adapted for residing between the external systems and the plurality of the devices, wherein different devices of said plurality of devices use different remote management servers, wherein the independent interface for communicating with the external systems is independent of the remote management server used by a device of said plurality of devices.

7. Application management server according to any of the claims 1-6, wherein the devices are service gateways.

8. System comprising an application manager of any of the previous claims, a plurality of external systems at a Northbound interface of the application management server, and a plurality of devices, typically service gateways at a Southbound interface thereof,
wherein the plurality of external systems are arranged for communicating with the application server using the generic method commands relating to the application, and
wherein the plurality of devices are arranged for communicating with the application server using the device-specific method commands relating to the application.

9. External system adapted for being installed at a Northbound interface of an application management server of any of the claims 1-7, wherein said external system is arranged for communicating with the application server using the generic method commands relating to the application.

10. Method for remote management of applications hosted on a device using an application server residing in a network between external systems at a Northbound interface and a plurality of devices at the Southbound interface,
wherein generic commands relating to the application are used for the communication between an external system and the application server, which generic method commands are converted in device-specific method commands useable by the device for which the generic commands are intended,
wherein said device manages the application using said device-specific method commands.

11. Method of claim 10, wherein said device manages the application using a remote management protocol, wherein the generic commands relating to the application exchanged between the external system and the application server are independent of the remote management protocol used by the device.

12. Method of claim 11, wherein the remote management protocols used by the device is any one of the following:
CWMP (CPE Wan Management Protocol, also known as TR-069), SNMP (Simple Network Management Protocol), or
OMA-DM (Open Mobile Alliance Device Management).

13. Method of any of the claims 10-12, wherein said device runs the application using a particular execution environment, wherein the generic method commands relating to the application exchanged between the external system and the application server are independent of the execution environment of the device.

14. Method of claim 13, wherein the execution environment of the device is any one of the following:
an OSGi (Open Service Gateway initiative) Execution Environment,
a .net Execution Environment, or
a Native Linux Execution Environment.

15. Method of any of the claims 10-14, wherein the device is a service gateway.
